# FASCICULE DE BREVET EUROPEEN

(11) **EP 0 875 948 B1**
(45) Date de publication et mention de la délivrance du brevet: **03.07.2002**
(21) Numéro de dépôt: 98401025.6
(22) Date de dépôt: 27.04.1998
(51) Int. Cl.: H01M 2/10, H01M 6/44

(54) **Dispositif d'assemblage en batterie de générateurs électrochimiques**
Vorrichtung zum Zusammenbau von elektrochemischen Generatoren in einer Batterie
Device for assembling electrochemical generators in a battery

(30) Priorité: 28.04.1997 FR 9705206
(43) Date de publication de la demande: 04.11.1998
(73) Titulaire: ALCATEL, 75008 Paris (FR)
(72) Inventeur: Naudet, Jean-Paul, 86180 Buxerolles (FR); Potiron, Francis, 86240 Fontaine Le Comte (FR)
(74) Mandataire: Laroche, Danièle

(56) Documents cités:
- DE-A- 2 805 067
- DE-U- 29 712 550
- FR-A- 2 737 807
- US-A- 4 806 440
- PATENT ABSTRACTS OF JAPAN vol. 013, no. 168 (E-747), 21 avril 1989 (1989-04-21) -& JP 64 002250 A (SANYO ELECTRIC CO LTD), 6 janvier 1989 (1989-01-06)
- PATENT ABSTRACTS OF JAPAN vol. 014, no. 168 (E-0912), 30 mars 1990 (1990-03-30) -& JP 02 024959 A (SONY CORP), 26 janvier 1990 (1990-01-26)
- PATENT ABSTRACTS OF JAPAN vol. 095, no. 007, 31 août 1995 (1995-08-31) -& JP 07 105921 A (MATSUSHITA ELECTRIC IND CO LTD), 21 avril 1995 (1995-04-21) -& DATABASE WPI Derwent Publications Ltd., London, GB; AN 95-188558 XP002052128
- PATENT ABSTRACTS OF JAPAN vol. 008, no. 078 (E-237), 10 avril 1984 (1984-04-10) -& JP 58 225557 A (CANON KK), 27 décembre 1983 (1983-12-27)

## Description

La présente invention concerne un dispositif d'assemblage en batterie de générateurs électrochimiques, tels que des piles.

Afin de former une batterie de piles, une solution connue est de les mettre dans un boîtier fermé par un couvercle soudé ou collé. Les piles ne sont alors plus visibles et il faut un moyen d'identification. De plus, l'encombrement du boîtier est important. Enfin le procédé de montage est relativement coûteux du fait qu'il nécessite des pièces de forme très différente et qu'il exige plusieurs étapes.

Il est aussi connu de mettre les piles à assembler sous gaine thermorétractable. Là encore, un moyen d'identification est nécessaire. Par ailleurs, le procédé de thermorétraction est difficile à maîtriser et à industrialiser. Enfin, la gaine obtenue a une trop faible résistance mécanique.

Une autre solution consiste à mettre la batterie entre deux flasques placés aux extrémités. Les flasques peuvent être collés ou assemblés en force auxdites extrémités, auquel cas la tenue mécanique de l'ensemble reste insuffisante, ou bien une pièce rapportée peut assurer la liaison mécanique entre les flasques, ce qui complique le montage et multiplie les pièces nécessaires.

Le document US-A-4 806 440 fait connaître un dispositif d'assemblage en batterie de quatre générateurs électrochimiques cylindriques, disposés côte-à-côte, comportant deux éléments constituant chacun une base d'appui de l'extrémité desdits générateurs ; l'un des deux éléments comporte des pattes allongées de liaison avec l'autre élément ; les deux éléments comportent des organes portant des moyens complémentaires d'encliquetage coopérant pour maintenir l'assemblage des deux éléments aux extrémités desdits générateurs. Cependant, le coût de cette solution est élevé du fait que les deux éléments sont différents et exigent deux moules d'injection, des stockages différents et un repérage pour la mise en place.

Le document DE-2 805 067 décrit un dispositif pour l'assemblage sous forme de colonne d'objets cylindriques de même diamètre. Ce dispositif se compose de deux éléments identiques comprenant chacun une base d'appui de l'extrémité des générateurs et une ou plusieurs parois longitudinales munies d'évidements longitudinaux, les parois étant renforcées sur leur face interne. Les deux éléments comportent des organes de centrage, la liaison avec l'autre élément étant obtenue notamment par soudage. En cas de fortes sollicitations ou de choc, la tenue mécanique de cet assemblage de générateurs électrochimiques est insuffisante.

Les documents JP-A-6 243 849 et JP-A-8 203 488 font aussi connaître des éléments d'assemblage différents.

Le but de l'invention est de remédier à ces inconvénients et de proposer un nouveau dispositif pour la mise en batterie de piles ou autres générateurs électrochimiques, ce dispositif étant de faible encombrement et de faible coût.

En outre ce dispositif doit permettre la sortie des fils et des connecteurs et assurer un bon maintien mécanique de la batterie. Avantageusement, il doit être indémontable.

Ce but est atteint dans le cadre de l'invention grâce à un dispositif d'assemblage en batterie de générateurs électrochimiques disposés côte-à-côte, composé de deux éléments identiques, caractérisé en ce que chacun desdits éléments comprend une base d'appui de l'extrémité desdits générateurs, ladite base étant formée d'un fond entouré d'un bord, au moins une patte allongée de liaison avec l'autre élément faisant corps avec ledit bord dont elle est issue perpendiculairement, des moyens complémentaires coopérant pour maintenir l'assemblage des deux éléments aux extrémités desdits générateurs, lesdits moyens complémentaires consistant en une saillie formée sur la patte de l'un desdits éléments dans une direction sensiblement perpendiculaire à la direction d'assemblage et un évidement dans le bord de l'autre élément recevant ladite saillie pour réaliser un encliquetage.

La présence d'un bord permet le maintien latéral des éléments et renforce la résistance de l'assemblage de générateurs aux chocs. Sa hauteur doit être suffisante pour assurer la tenue de l'assemblage, mais suffisamment réduite pour ne pas alourdir le dispositif, ni le rendre plus coûteux.

Le bord comporte avantageusement une échancrure pour le passage des connexions électriques. La sortie des fils peut se faire axialement ou radialement.

Les deux pièces nécessaires au maintien d'une batterie sont rigoureusement identiques et peuvent être réalisées en plastique semi-rigide par injection dans un seul moule.

Il suffit pour le montage de placer les pièces autour des piles et de les fixer par encliquetage tête-bêche l'une dans l'autre. Aucun autre moyen de fixation n'est nécessaire pour assurer la tenue mécanique des générateurs assemblés grâce au dispositif selon l'invention. Une fois insérée dans l'évidement, la saillie bloque l'assemblage et les pièces ne peuvent plus être séparées.

Ces pièces assurent à la fois le maintien mécanique des générateurs, l'isolation électrique et mécanique vis-à-vis de l'environnement (par exemple en cas de chocs de pièces dures ou d'objets agressifs) et elles permettent l'identification (les générateurs restent visibles).

Le système de maintien et de liaison conforme à l'invention, externe à la batterie, est remarquable en ce qu'il n'occupe que pas ou peu de place hors du volume-enveloppe de la batterie.

En outre, le volume vide ménagé à l'intérieur dudit volume-enveloppe permet d'inclure éventuellement des composants de sécurité ou autres (composants électroniques, fils, etc.). Avantageusement, la face interne de la patte est profilée de manière à augmenter encore le volume libre.

Le dispositif peut être adapté à n'importe quel nombre de générateurs. Dans le mode de réalisation le plus simple, il permet d'assembler deux générateurs cylindriques. Le fond des éléments a sensiblement la forme d'un rectangle aux angles arrondis et une seule patte par élément suffit à assurer un bon maintien mécanique.

Pour l'assemblage de quatre générateurs, le fond a la forme d'un carré aux angles arrondis, et on peut prévoir une patte unique, ou deux pattes disposées sur deux côtés du carré. De plus, l'invention s'adapte aux diverses formes (cylindriques, prismatiques) et tailles des générateurs.

D'autres caractéristiques et avantages de l'invention ressortiront de la description suivante d'un mode particulier de réalisation, description pour laquelle on se référera aux dessins annexés sur lesquels :

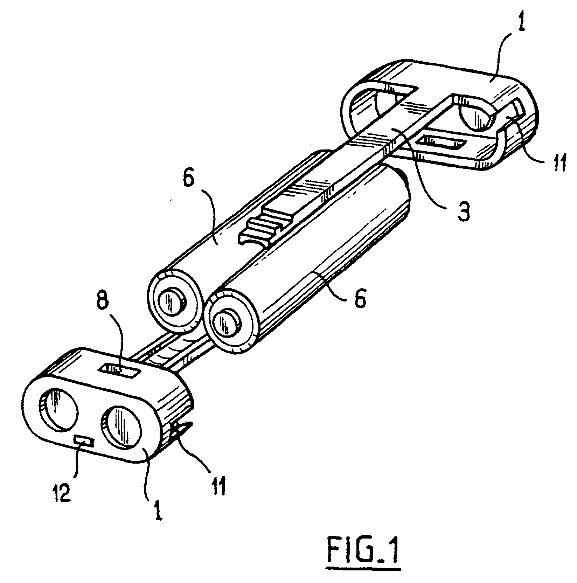

La figure 1 montre en perspective éclatée deux piles destinées à être maintenues par deux éléments identiques conformes à l'invention.

Les figures 2A et 2B montrent en perspective deux de ces éléments identiques, respectivement dans un sens et dans l'autre, tels qu'ils se présentent pour former l'assemblage conforme à l'invention.

Chaque élément de maintien 1, réalisé de préférence par moulage en plastique semi-rigide isolant électriquement, comprend une base de logement 2 et une patte de liaison et d'encliquetage 3.

La base 2 est constituée d'un fond allongé 4, entouré d'un bord 5, d'une hauteur par exemple de 5 à 10 mm. Le fond et le bord sont conformés pour loger pratiquement sans jeu l'extrémité de deux piles cylindriques contiguës 6, et pourraient éventuellement présenter une légère concavité sur leurs grands côtés 7.

La patte 3, formant corps avec le bord 5, part perpendiculairement de celui-ci, de préférence au milieu d'un grand côté, car les piles y laissent la place nécessaire pour le fléchissement de la patte 3 lorsqu'elle s'encliquette dans l'élément opposé. La patte a une longueur bien supérieure à la hauteur du bord. La longueur de la patte augmentée de la hauteur des bords situés à chaque extrémité est égale à la hauteur des générateurs électrochimiques à assembler, soit par exemple pour des générateurs de format AA une hauteur totale d'environ 62mm.

Afin de réaliser cet encliquetage, le bord 5 de la base comporte un évidement 8 sur sa paroi interne, au milieu du grand côté opposé à celui d'où part la patte 3. Cet évidement 8 peut recevoir une saillie 9 correspondante formée vers l'extrémité de la patte 3, au besoin dans un enfoncement 10. Dans le cas représenté sur les figures, la saillie 9 a une forme telle que une fois bloquée dans l'évidement 8, la face externe du dispositif est pratiquement plane.

Si l'évidement 8 n'est pas traversant, l'encliquetage est absolument indémontable de l'extérieur. Mais, même avec un évidement traversant comme représenté, le démontage sans outils est difficile compte tenu de la rigidité de la patte.

Le bord 5 comprend une échancrure 11 destinée au passage radial des connexions. Une sortie axiale, telle que l'ouverture 12 pratiquée dans le fond 4, peut aussi être prévue.

Avantageusement, la patte 3 présente une forme de gouttière 13 sur sa face interne, qui constitue un volume disponible permettant d'inclure éventuellement des composants de sécurité ou autres (composants électroniques, fils, etc.)

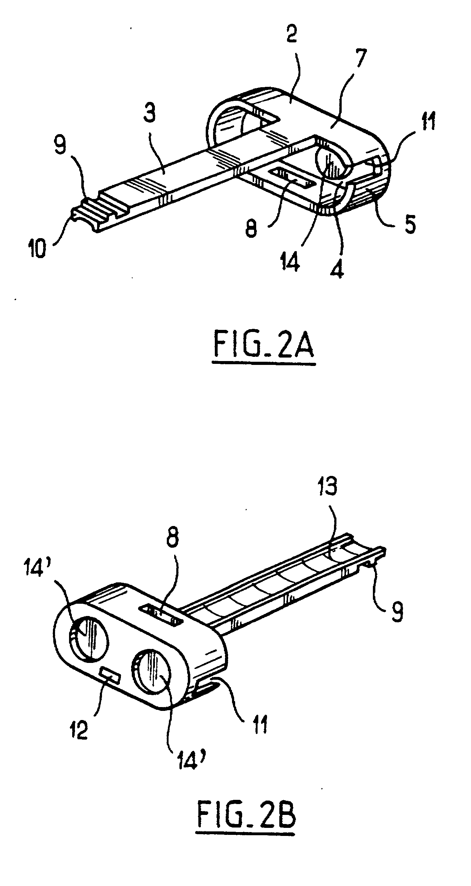

On peut prévoir des bossages 14 (figure 2A) sur le fond 4 destinés à caler les piles (ces bossages correspondent aux enfoncements 14' de la figure 2B). En réglant dans le moule la hauteur de ces bossages 14, on peut adapter le moule à la réalisation de dispositifs convenant pour des générateurs de hauteurs différentes.

Le dispositif selon l'invention présente de multiples avantages par rapport aux dispositifs connus.

Il n'augmente pas le volume-enveloppe de l'assemblage de générateurs électrochimiques, mais au contraire en réduit l'encombrement en permettant de loger certains composants à l'intérieur du volume-enveloppe.

Il est pratiquement indémontable est ainsi garantie la sécurité de l'utilisateur. Bien enfermés à l'intérieur du dispositif selon l'invention, les générateurs sont parfaitement inaccessibles.

Il est peu coûteux à produire et à mettre en oeuvre, à titre d'exemple des économies de l'ordre de 20 à 30% sur la réalisation de l'assemblage sont attendues. La quantité de matière nécessaire est réduite. Sa fabrication est rendue plus simple par l'identité des deux pièces et plus souple car on peut facilement adapter le moule, donc les pièces produites, aux différents formats de générateurs. Enfin l'assemblage des générateurs électrochimiques à l'aide de ce dispositif est plus aisé et plus rapide.

## Revendications

1. Dispositif d'assemblage en batterie de générateurs électrochimiques (6) disposés côte-à-côte, composé de deux éléments (1) identiques, **caractérisé en ce que** chacun desdits éléments comprend
une base (2) d'appui de l'extrémité desdits générateurs, ladite base (2) étant formée d'un fond (4) entouré d'un bord (5),
au moins une patte allongée (3) de liaison avec l'autre élément faisant corps avec ledit bord (5) dont elle est issue perpendiculairement,
des moyens complémentaires (8, 9) coopérant pour maintenir l'assemblage des deux éléments (1) aux extrémités desdits générateurs (6), lesdits moyens complémentaires consistant en une saillie formée sur la patte de l'un desdits éléments dans une direction sensiblement perpendiculaire à la direction d'assemblage et un évidement dans le bord de l'autre élément recevant ladite saillie pour réaliser un encliquetage (8, 9).

2. Dispositif selon la revendication 1, dans lequel ledit fond (4) comporte des bossages (14) destinés à caler lesdits générateurs.

3. Dispositif selon l'une des revendications 1 et 2, dans lequel la base (2) comporte une sortie axiale (12) pour le passage des connexions électriques.

4. Dispositif selon l'une des revendications précédentes, dans lequel le bord (5) comporte une échancrure (11) pour le passage des connexions électriques.

5. Dispositif selon l'une des revendications précédentes, dans lequel ladite patte (3) comporte une forme de gouttière (13) sur sa face interne ménageant un volume disponible.

## Patentansprüche

1. Vorrichtung zum Zusammenbau von elektrochemischen Generatoren (6) nebeneinander in einer Batterie, bestehend aus zwei identischen Elementen (1), **dadurch gekennzeichnet, dass** jedes dieser Elemente umfasst
eine Basis (2) für die Auflage des Endes der Generatoren, wobei die Basis (2) in Form eines Bodens (4) ausgebildet ist, umgeben von einem Rand (5),
zumindest einen länglichen Fuß (3) zur Verbindung mit dem anderen Element, der einen Körper mit dem Rand (5) bildet von dem er rechtwinklig ausgeht,
Zusatzeinrichtungen (8, 9), die zusammenwirken, um den Zusammenbau der zwei Elemente (1) an den Enden der Generatoren (6) aufrechtzuerhalten, wobei die Zusatzeinrichtungen aus einem Vorsprung bestehen, der an dem Fuß eines der Elemente in einer Richtung ausgebildet ist, im Wesentlichen rechtwinklig zur Zusammenbaurichtung sowie eine Ausnehmung in dem Rand des anderen Elementes, die den Vorsprung aufnimmt, um eine Verrastung (8, 9) zu realisieren.

2. Vorrichtung nach Anspruch 1, bei der der Boden (4) Höcker (14) umfasst, die dazu dienen, die Generatoren zu verkeilen.

3. Vorrichtung nach einem der Ansprüche 1 und 2, bei der die Basis (2) einen Axialausgang (12) umfasst, für die Durchführung von elektrischen Verbindungen.

4. Vorrichtung nach einem der vorhergehenden Ansprüche, bei der der Rand (5) einen Ausschnitt (11) für die Durchführung von elektrischen Verbindungen umfasst.

5. Vorrichtung nach einem der vorhergehenden Ansprüche, bei der der Fuß (3) die Form einer Rinne (13) hat, die an ihrer Innenseite ein verfügbares Volumen aufweist.

## Claims

1. A device for assembling electrochemical cells together (6) side-by-side to form a battery, the device being made up of two identical elements (1), said device being **characterized in that** each of said elements comprises:
a base (2) against which the ends of said cells can bear, said base (2) being formed of an end wall (4) surrounded by an edge band (5);
at least one elongate coupling prong (3) for coupling to the other element, which prong is integrally molded with said edge band (5) from which it projects perpendicularly; and
complementary means (8, 9) co-operating to hold the two elements (1) assembled together at the ends of said cells (6), said complementary means consisting firstly of a tooth formed on the prong of one of the elements and projecting in a direction that is substantially perpendicular to the assembly direction, and secondly of a recess in the edge band of the other element for receiving said tooth so as to snap-fasten (8, 9).

2. A device according to claim 1, in which said end wall (4) is provided with projections (14) serving to wedge said cells.

3. A device according to claim 1 or 2, in which the base (2) is provided with an axial outlet (12) enabling electrical connections to pass through.

4. A device according to any preceding claim, in which the edge band (5) is provided with a notch (11) enabling electrical connections to pass through.

5. A device according to any preceding claim, in which the inside face of said prong (3) is shaped in the form of a trough (13), thereby offering an available volume.
